Europäisches Patentamt

European Patent Office

Office européen des brevets

(11) Publication number: **0 415 607 A2**

# EUROPEAN PATENT APPLICATION

(21) Application number: **90309047.0**

(22) Date of filing: **17.08.90**

(51) Int. Cl.⁵: **H01M 4/66**

(30) Priority: **17.08.89 US 395223**

(43) Date of publication of application:
**06.03.91 Bulletin 91/10**

(84) Designated Contracting States:
**BE DE DK FR GB**

(71) Applicant: **EVEREADY BATTERY COMPANY, INC.**
**Checkerboard Square**
**St. Louis Missouri 63164(US)**

(72) Inventor: **Hunter, James C.**
**43869 Russia Road**
**Elyria, Ohio 44035(US)**
Inventor: **Nardi, John C.**
**3398 Tyler Drive**
**Brunswick, Ohio 44212(US)**
Inventor: **Russell, Edwin T.**
**5377 River Styx Road**
**Medina, Ohio 44256(US)**
Inventor: **Scarr, Robert F.**
**1370 Patti Park**
**Westlake, Ohio 44145(US)**

(74) Representative: **Lord, Hilton David et al**
**Marks & Clerk 57-60 Lincoln's Inn Fields**
**London WC2A 3LS(GB)**

(54) Coated anode current collectors.

(57) The present invention relates to an alkaline cell having an anode current collector which is coated with a lead-containing layer containing a discontinuous dispersion of lead to effectively reduce gassing at the surface of the anode current collector during storage of the cell.

## COATED ANODE CURRENT COLLECTORS

The present invention relates to alkaline cells having an anode current collector, typically of steel or brass.

Manufacturers of primary alkaline batteries have long recognised the existence of internal gassing that occurs prior to discharging a cell. This phenomenon, commonly referred to as "shelf gassing", can pressurise a cell such that the flat bottom of a cylindrical battery becomes bulged.

One problem created by severely bulged cell bottoms is that the cell, or a combination of cells, may be too long to fit into a battery compartment located within a battery operated device. In severe cases, the pressure buildup may activate the cell's safety vent, and electrolyte expelled through the vent may injure people and/or damage the device.

Several methods have been used to minimise shelf gassing. The best known method relies upon amalgamation of the anode's zinc surface to raise hydrogen evolution overvoltage on the surface of the zinc. As the overvoltage increases, the rate of hydrogen gas generation is restricted.

Alternatively, a variety of organic compounds has been used to coat the surface of the zinc. Representative examples of organic corrosion inhibitors may be found in US-A-3,847,669, or US-A-4,195,120, directed toward the use of organic phosphate esters, or US-A-4,606,984, which discloses a fluorinated molecule that contains an ethoxylated polymer unit.

In another method, the anode's zinc particles are altered by incorporating minor quantities of elements such as indium, lead, thallium and/or gallium into the zinc. This combination of zinc and at least one other element may take the form of a surface deposit or an alloy.

Zinc particles have also been modified by heating in order to reduce the number of grain boundaries. Since the gas generating reactions are thought to occur primarily at the grain boundaries, the quantity of gas generated may be reduced as the number of grain boundaries per particle of zinc is reduced.

While all of these methods have been claimed to be effective at reducing cell gassing, none of the inhibitors have effectively demonstrated the ability to limit gassing to a very low level in a mercury-free cell, or in a cell that contains very little mercury.

In alkaline batteries employing conventional type brass anode current collectors, internal gassing is still a major problem. Common choices for the anode current collector are steel, copper, zinc and brass, the most common being brass, with a typical brass anode current collector having a composition of about 65% to 70% copper and about 30% to 35% zinc. However, in mercury-free alkaline cells or alkaline cells containing a very low amount of mercury, internal gassing is even more of a problem, since it may cause the housing of the battery to expand, i.e., to give rise to a bulged cell bottom, even when using corrosion inhibitors. Furthermore, the use of a conventional brass anode current collector in such cells has been found to agravate the problem.

It has now been discovered that gassing at the surface of a conventional brass current collector may be effectively reduced by replacing the conventional brass with a conductive anode current collector, including brass, having on its surface a layer of a discontinuous dispersion of a minimum amount of lead.

In a first aspect, the present invention provides an alkaline cell comprising a conductive anode current collector coated with a discontinuous layer of lead.

In an alternative aspect, there is provided an electrcohemical cell comprising an anode such as zinc, a cathode, an alkaline electrolyte, and a conductive anode current collector comprising a substrate coated with a layer of a discontinuous dispersion of lead in which the amount of lead contained in the layer on the surface of the anode current collector is at least 150 parts per million based on the weight of a 0.1 $\mu$m thick portion of the layer on the surface of the substrate.

The lead is preferably in the form of a layer of a discontinuous dispersion of lead. The amount of lead is advantageously at least 150 parts per million based on the weight of a 0.1 $\mu$m thick portion of the layer on the surface of the collector, preferably in an amount of from about 500 parts per million to about 45,000 parts per million, especially from about 1500 parts per million to about 30,000 parts per million.

The thickness of the layer of the lead-containing coating on the surface of the substrate may vary greatly, without any particular limits, provided that the lead is dispersed on the surface of the collector. However, a suitable range is from about 0.1 $\mu$m thick to about 100 $\mu$m thick.

The substrate is preferably selected from steel, copper, zinc and alloys thereof, particularly a copper-zinc alloy, especially one containing from 60 to 75 weight percent copper, and 40 to 25 weight percent zinc.

Advantageously, the discontinuous layer of lead is in the form of a mixture of zinc and lead. To reduce gassing, the layer of lead may further comprise cadmium, especially in an amount of at least 1000 parts per million based on the weight of a 0.1 $\mu$m thick portion of the layer on the surface of the substrate.

Also to reduce gassing, the layer of lead may further comprise indium, especially in an amount of at least 40 parts per million based on the weight of a 0.1 $\mu$m thick portion of the layer on the surface of the substrate.

In the cells of the invention, the anode is preferably zinc, the cathode manganese dioxide, and the electrolyte pctassium hydroxide.

In addition, it is advantageous for the anode to contain no mercury.

The collector of the invention is usable in alkaline cells in general, to reduce gassing, and the present invention provides such a collector. Below certain levels, the lead has little or no effect, and this also tends to be true above certain levels.

The term 'discontinuous dispersion' means that the lead contained on the surface of the layer on the anode current collector does not form a continuous layer of lead, but forms separate areas of lead on the surface.

The present invention particularly provides an alkaline cell employing a zinc anode and wherein the anode current collector used with the zinc anode comprises a substrate coated on its surface with a layer containing a discontinuous dispersion of lead to effectively reduce gassing in the cell during storage.

It is an advantage of the present invention that it provides an alkaline electrochemical cell, especially mercury-free, or substantially mercury-free, with a zinc anode that displays little or effectively no internal gassing during storage.

The conductive anode current collector, which is preferably a copper-zinc alloy, has, advantageously, on its surface, a layer of discontinuous dispersion of lead, especially in a lead and zinc mixture.

Cylindrical alkaline cells are generally manufactured with a zinc anode, a manganese dioxide cathode and an alkaline electrolyte. The manganese dioxide is generally pressed up against the inner wall of the cylindrical container and a suitable separator material is fitted in the cavity. A mixture comprising zinc is placed in the interior of the separator and then an anode current collector is placed into the zinc mixture. The anode may, for example, be pressed powder, or zinc in a powdered form distributed throughout an electrolyte gel.

The minimum amount of lead discontinuously dispersed in the layer on the surface of the current collector should preferably be at least 150 parts per million based on the weight of a 0.1 $\mu$m thick portion of the layer on the surface of the anode current collector. Preferably, the dispersed lead should be from 500 parts per million to 45,000 parts per million and, more preferably, from 1500 parts per million to 30,000 parts per million based on the weight of a 0.1 $\mu$m thick portion of the layer on the surface of the anode current collector.

The lead may be deposited on the surface by any conventional technique, such as spraying, electroplating or painting. The lead is preferably deposited as a zinc-lead mixture onto the surface of the conductive substrate, provided that the lead is discontinuously dispersed on the surface of the anode current collector. In this embodiment, if the substrate is a copper-zinc alloy, then the codeposition of the zinc and lead mixture should cover any exposed copper on the surface of the anode current collector, so as to prevent the possibility of any reaction occurring due to the exposure of the copper in the presence of the alkaline electrolyte.

In a zinc alkaline cell using an anode current collector substrate made of a copper-zinc alloy, the copper is required to provide adequate conductivity for the current collector, while the zinc is compatible with the zinc anode. Preferably, the copper forms at least 50 weight percent of the copper-zinc alloy, with the remainder being substantially zinc. More preferably, the copper-zinc alloy substrate comprises from 60 to 75 weight percent copper and 40 to 25 weight percent zinc.

In addition to a copper-zinc alloy substrate, any conductive material compatible with the electrochemical system of the cell may be used as the material for the substrate of the anode current collector. Thus, the anode current collector may be a conductive substrate such as steel, copper, zinc, and alloys thereof coated with a discontinuous dispersion of lead or lead in a lead mixture, such as a lead-zinc mixture.

Gassing may be further reduced by the addition of a small amount of cadmium to the discontinuous layer of lead on the anode collector. The cadmium may be dispersed or codeposited along with the lead, and may be added in the lead-containing layer, preferably in an amount of at least 1000 parts per million based on the weight of a 0.1 $\mu$m thick portion of the lead-containing layer on the surface of the anode ourrent collector.

Indium may also be added to the lead-containing layer on the anode current collector to further reduce gassing in the cell. The indium may be dispersed or codeposited along with the lead or lead-containing mixture on the surface of the current collector substrate, in an amount of preferably at least 40 parts per million based on the weight of a 0.1 $\mu$m thick portion of the lead-containing layer on the surface of the anode current collector.

The effects, features and advantages of the present invention will be demonstrated in the following Examples, which are for illustration only and should not be interpreted to impose any limitations on the invention.

Example 1

Mercury-free "D" size cells were produced using an anode comprised of granular zinc and a gelling agent; a cathode of manganese dioxide, carbon and a binder; and an electrolyte comprised of potassium hydroxide. The components of each cell were placed in a nickel plated steel container which served as both the container and as the cathode's current collector. The variable in each cell was the anode current collector, which was either a copper-zinc alloy or a lead-zinc coated copper-zinc alloy. The cells were stored at 71°C for eight weeks and, at intervals, the net bulge for each Sample Lot was measured. The average net bulge data are shown in Table 1.

Table 1

| Cells Stored at 71°C | | | |
|---|---|---|---|
| *Sample Lot 1 | | **Sample Lot 2 | |
| Time | Bulge | Time | Bulge |
| (weeks) | (inch/mm) | (weeks) | (inch/mm) |
| 1 | 0.021/0.53 | 1 | 0.012/0.30 |
| 2 | 0.029/0.74 | 2 | 0.014/0.36 |
| 3 | 0.030/0.76 | 3 | 0.016/0.41 |
| 4 | 0.030/0.76 | 4 | 0.015/0.38 |
| 6 | 0.034/0.86 | 6 | 0.016/0.41 |
| 8 | 0.034/0.86 | 8 | 0.017/0.43 |

\* Sample Lot 1 consisted of ten cells, each employing an anode current collector comprising a copper-zinc alloy obtained commercially as copper alloy No. C26000 containing 68.5 to 71.5 weight percent copper, balance substantially zi c.

\** Sample Lot 2 consisted of twenty cells each employing an anode current collector comprising 68.5 to 71.5 weight percent copper, balance substantially zinc. The anode current collector was coated with a lead-zinc mixture containin 2070 parts per million lead based on the weight of the lead-zinc mixture. The coating deposited on the anode current collector was 1.99 μm thick.

The data in Table 1 show that cells (Sample Lot 1) with no lead-zinc coating on the anode current collector have a substantially greater average bulge than cells (sample Lot 2) using an anode current collector coated with a lead-zinc coating. In cells employing anode current collectors coated with a lead-zinc mixture, gassing is substantially reduced.

Example 2

Mercury-free "D" size cells were produced as in Example 1, the variable of each lot being the anode current collector which was either a copper-zinc alloy anode current collector or a lead-zinc coated copper-zinc alloy anode current collector. The cells were stored at 71°C for three weeks and at weekly intervals the net average bulge for ten cells in each Sample Lot was measured. The average net bulge data are shown in Table 2.

Table 2

| Cells Stored at 71° C | | | |
|---|---|---|---|
| *Sample Lot 1 | | **Sample Lot 2 | |
| Time | Bulge | Time | Bulge |
| (weeks) | (inch/mm) | (weeks) | (inch/mm) |
| 1 | 0.048/1.22 | 1 | 0.018/0.46 |
| 2 | 0.062/1.57 | 2 | 0.028/0.71 |
| 3 | 0.058/1.47 | 3 | 0.031/0.79 |

\* Sample Lot 1 consisted of ten cells, each employing an anode current collector comprising 68.5 to 71.5 weight percent copper, balance substantially zinc.
\*\* Sample Lot 2 consisted of ten cells, each employing an anode current collector comprising 68.5 to 71.5 weight percent copper, balance substantially zinc. The anode current collector was coated with a lead-zinc mixture containing 73 parts per million lead based on the weight of the lead-zinc mixture. The coating deposited on the anode current collector was 0.8 $\mu$m thick.

The data in Table 2 show that the cells (Sample Lot 1) with no lead-zinc coating on the anode current collectors had a substantially greater average bulge than the average bulge of the cells (Sample Lot 2) using anode current collectors coated with a layer of lead-zinc.

Example 3

Mercury-free "D" size cells were produced as in Example 1. Again, the variable of each lot was the anode current collector, which was either a copper-zinc alloy anode current collector or a lead-zinc coated copper-zinc alloy anode collector. The cells were stored at 71° C for three weeks and, at weekly intervals, the net average bulge for ten cells in each Sample Lot was measured. The average net bulge data are shown in Table 3.

Table 3

| Cells Stored at 71° C | | | | |
|---|---|---|---|---|
| *Sample Lot 1 | | | **Sample Lot 2 | |
| Time | Bulge | | Time | Bulge |
| (weeks) | (inch/mm) | | (weeks) | (inch/mm) |
| 1 | 0.048/1.22 | 1 | 0.018/0.46 | |
| 2 | 0.062/1.57 | 2 | 0.027/0.69 | |
| 3 | 0.058/1.47 | 3 | 0.030/0.76 | |

* Sample Lot 1 consisted of ten cells, each employing an anode current collector comprising 68.5 to 71.5 weight percent copper, balance substantially zinc.
** Sample Lot 2 consisted of ten cells, each employing an anode current collector comprising 68.5 to 71.5 weight percent copper, balance substantially zinc. The anode current collector was coated with a lead-zinc mixture containing 498 parts per million lead based on the weight of the lead-zinc mixture. The coating deposited on the anode current collector was 0.61 $\mu$m thick.

The data in Table 3 show that the cells (Sample Lot 1) with no lead-zinc coating on the anode current collectors had a substantially greater average bulge than the average bulge of the cells (Sample Lot 2) using anode current collectors coated with a layer of lead-zinc.

Example 4

Mercury-free "D" size cells were produced as in Example 1. Again, the variable of each lot was the anode current collector which was either a copper-zinc alloy anode current collector or a lead-zinc coated copper-zinc alloy anode current collector. The cells were stored at 71° C for three weeks and, at weekly intervals, the net average bulge for ten cells in each Sample Lot was measured. The average net bulge data are shown in Table 4.

Table 4

| Cells Stored at 71 ° C | | | | |
|---|---|---|---|---|
| *Sample Lot 1 | | | **Sample Lot 2 | |
| Time | Bulge | | Time | Bulge |
| (weeks) | (inch/mm) | | (weeks) | (inch/mm) |
| 1 | 0.048/1.22 | 1 | 0.018/0.46 | |
| 2 | 0.062/1.57 | 2 | 0.027/0.69 | |
| 3 | 0.058/1.47 | 3 | 0.032/0.81 | |

\* Sample Lot 1 consisted of ten cells, each employing an anode current collector comprising 68.5 to 71.5 weight percent copper, balance substantially zinc.

\*\* Sample Lot 2 consisted of ten cells, each employing an anode current collector comprising 68.5 to 71.5 weight percent copper, balance substantially zinc. The anode current collector was coated with a lead-zinc mixture containing 771 parts per million lead based on the weight of the lead-zinc mixture. The coating deposited on the anode current collector was 0.65 $\mu$m thick.

The data in Table 4 show that the cells (Sample Lot 1) with no lead-zinc coating on the anode current collectors had a substantially greater average bulge than the average bulge of the cells (Sample Lot 2) using anode current collectors coated with a layer of lead-zinc.

Example 5

Mercury-free "D" size cells were produced as in Example 1. Again, the variable of each lot was the anode current collector, which was either a copper-zinc alloy anode current collector or a lead-zinc coated copper-zinc alloy anode current collector. The cells were stored at 71 ° C for three weeks and, at weekly intervals, the net average bulge for ten cells in each Sample Lot was measured. The average net bulge data are shown in Table 5.

Table 5

| Cells Stored at 71°C | | | | |
|---|---|---|---|---|
| *Sample Lot 1 | | | **Sample Lot 2 | |
| Time | Bulge | | Time | Bulge |
| (weeks) | (inch/mm) | | (weeks) | (inch/mm) |
| 1 | 0.048 | 1 | 0.015 | |
| 2 | 0.062 | 2 | 0.020 | |
| 3 | 0.058 | 3 | 0.022 | |

* Sample Lot 1 consisted of ten cells, each employing an anode current collector comprising 68.5 to 71.5 weight percent copper, balance substantially zinc.
** Sample Lot 2 consisted of ten cells, each employing an anode current collector comprising 68.5 to 71.5 weight percent copper, balance substantially zinc. The anode current collector was coated with a lead-zinc mixture containing 2070 parts per million lead based on the weight of the lead-zinc mixture. The coating deposited on the anode current collector was 1.99 μm thick.

The data in Table 5 show that the cells (Sample Lot 1) with no lead-zinc coating on the anode current collectors has a substantially greater average bulge than the average bulge of the cells (Sample Lot 2) using anode current collectors coated with a layer of lead-zinc.

Example 6

Mercury-free "D" size cells were produced as in Example 1. Again, the variable of each lot was the anode current collector which was either a copper-zinc alloy anode current collector or a lead-zinc coated copper-zinc alloy anode current collector. The cells were stored at 71°C for three weeks and, at weekly intervals, the net average bulge for ten cells in each Sample Lot was measured. The average net bulge data are shown in Table 6.

EP 0 415 607 A2

Table 6

| Cells Stored at 71° C | | | | |
|---|---|---|---|---|
| *Sample Lot 1 | | | **Sample Lot 2 | |
| Time | Bulge | | Time | Bulge |
| (weeks) | (inch/mm) | | (weeks) | (inch/mm) |
| 1 | 0.048/1.22 | 1 | 0.016/0.41 | |
| 2 | 0.062/1.57 | 2 | 0.025/0.64 | |
| 3 | 0.058/1.47 | 3 | 0.025/0.64 | |

\* Sample Lot 1 consisted of ten cells, each employing an anode current collector comprising 68.5 to 71.5 weight percent copper, balance substantially zinc.
\*\* Sample Lot 2 consisted of ten cells, each employing an anode current collector comprising 68.5 to 71.5 weight percent copper, balance substantially zinc. The anode current collector was coated with a lead-zinc mixture containing 28,600 parts per million lead based on the weight of the lead-zinc mixture. The coating deposited on the anode current collector was 0.78 $\mu$m thick.

The data in Table 6 show that the cells (Sample Lot 1) with no lead-zinc coating on the anode current collectors had a substantially greater average bulge than the average bulge of the cells (Sample Lot 2) using anode current collectors coated with a layer of lead-zinc.

**Claims**

1. An alkaline cell comprising a conductive anode current collector coated with a discontinuous layer of lead.

2. A cell according to claim 1, wherein the lead is in the form of a layer of a discontinuous dispersion of lead.

3. A cell according to claim 1 or 2, wherein the amount of lead is at least 150 parts per million based on the weight of a 0.1 $\mu$m thick portion of the layer on the surface of the collector.

4. A cell according to claim 3, wherein the amount of lead is from about 500 parts per million to about 45,000 parts per million.

5. A cell according to claim 3, wherein the amount of lead is from about 1500 parts per million to about 30,000 parts per million.

6. A cell according to any preceding claim, wherein the collector is steel, copper, zinc or an alloy thereof.

7. A cell according to claim 6, wherein the collector is a copper-zinc alloy.

8. A cell according to claim 7, wherein the alloy contains from 60 to 75 weight percent copper, and 40 to 25 weight percent zinc.

9. A cell according to any preceding claim, wherein the discontinuous layer of lead is in the form of a mixture of zinc and lead.

10. A cell according to any preceding claim, wherein the layer of lead further comprises cadmium.

11. A cell according to claim 10, wherein the amount of cadmium is in an amount of at least 1000 parts per million based on the weight of a 0.1 $\mu$m thick portion of the layer on the surface of the substrate.

12. A cell according to any preceding claim, wherein the layer of lead further comprises indium.

13. A cell according to claim 12, wherein the amount of indium is in an amount of at least 40 parts per million based on the weight of a 0.1 $\mu$m thick portion of the layer on the surface of the substrate.

14. A cell according to any preceding claim, wherein the anode is zinc and the cathode is manganese dioxide.

15. A cell according to any preceding claim, wherein the electrolyte is potassium hydroxide.

16. A cell according to any preceding claim, wherein the anode contains no mercury.

17. An electrochemical cell comprising an anode, a cathode, an alkaline electrolyte, and a conductive anode

9

current collector comprising a substrate coated with a layer of a discontinuous dispersion of lead in which the amount of lead contained in the layer on the surface of the anode current collector is at least 150 parts per million based on the weight of a 0.1 $\mu$m thick portion of the layer on the surface of the substrate,

said cell optionally further comprising any one or more suitable features as defined in any preceding claim, in any suitable combination.

18. A conductive anode current collector coated with a discontinuous layer of lead,

said collector optionally further comprising any one or more suitable features as defined in any preceding claim, in any suitable combination.